# FASCICULE DE BREVET EUROPEEN

(11) **EP 3 215 349 B1**
(45) Date de publication et mention de la délivrance du brevet: **08.04.2020**
(21) Numéro de dépôt: 15788040.2
(22) Date de dépôt: 02.11.2015
(51) Int. Cl.: B22F 3/105, B33Y 30/00, B29C 64/153, B29C 64/20

(54) **MACHINE ET PROCÉDÉ POUR LA FABRICATION ADDITIVE À BASE DE POUDRE**
VORRICHTUNG UND VERFAHREN ZUR PULVERBASIERTEN GENERATIVEN HERSTELLUNG
MACHINE AND METHOD FOR POWDER-BASED ADDITIVE MANUFACTURING

(30) Priorité: 04.11.2014 FR 1460623
(43) Date de publication de la demande: 13.09.2017
(73) Titulaire: Compagnie Générale des Etablissements Michelin, 63000 Clermont-Ferrand (FR)
(72) Inventeur: WALRAND, Gilles, F-63040 Clermont-Ferrand Cedex 09 (FR); GEAY, Christian, F-63040 Clermont-Ferrand Cedex 09 (FR); ALLARD, Jean-Baptiste, F-63040 Clermont-Ferrand Cedex 09 (FR)
(74) Mandataire: Barascou, Frédéric
(86) Numéro de dépôt international: PCT/EP2015/075414
(87) Numéro de publication internationale: WO 2016/071265

(56) Documents cités:
- WO-A2-2013/178825
- US-A1- 2013 112 672
- US-A1- 2013 270 750

## Description

La présente invention concerne une machine et un procédé de fabrication additive à base de poudre par frittage ou par fusion de grains de ladite poudre à l'aide d'un faisceau énergétique. Par « faisceau énergétique », on entend un rayonnement électromagnétique (par exemple un faisceau laser) ou un faisceau de particules (par exemple un faisceau d'électrons).

L'intérêt de la fabrication par fusion sélective de couches de poudre superposées, plus communément nommée frittage, réside principalement dans le fait que la forme des pièces peut être modélisée par ordinateur et que les pièces peuvent ensuite être fabriquées sur la base de cette modélisation par pilotage du faisceau énergétique par l'ordinateur. En outre, cette technique est bien adaptée à la fabrication de pièces de petites dimensions et de formes complexes qui sont difficiles à fabriquer avec d'autres procédés.

Lorsque la fusion sélective est réalisée par un faisceau laser, on parle de frittage laser. La technique de frittage laser consiste à fabriquer la pièce couche après couche, en empilant les couches de poudre consolidées et fusionnées les unes sur les autres par le faisceau laser selon une direction d'empilage. On entend par « poudre », une poudre ou un mélange de poudres. La poudre peut par exemple être métallique ou minérale, par exemple céramique.

Classiquement, pour assurer la préparation du lit de poudre préalablement à l'opération de frittage ou fusion, il est utilisé un dispositif de mise en couche. Un tel dispositif peut comprendre un cylindre ou rouleau apte à répartir sur un plateau de fabrication la poudre en une couche. Pour plus de détails, on pourra par exemple se référer aux demandes de brevet WO-A1-2013/092757 et WO-A1-2013/178825.

La première couche est déposée puis soudée directement sur le plateau de fabrication. Les autres couches sont ensuite formées successivement de manière à obtenir un empilage à partir de la première couche. Pour réaliser de manière sélective la fusion de la poudre, il est prévu une source qui émet un faisceau énergétique dont l'orientation est contrôlée par des miroirs galvanométriques, et une lentille optique permettant de focaliser le faisceau énergétique sur les couches de poudre déposées sur le plateau de fabrication.

Afin d'augmenter la productivité de fabrication, le document WO-A1-2013/178825 préconise de prévoir une machine comprenant deux plateaux de fabrication distincts associés chacun à une source d'émission d'un faisceau énergétique et à des moyens de contrôle du faisceau énergétique propres à chaque source de sorte à former une pièce sur chacun des plateaux. La machine comprend également un dispositif de mise en couche commun aux deux plateaux de fabrication. Ainsi, l'opération de fusion de la couche de poudre déposée dans la zone de travail de l'un des plateaux peut être effectuée pendant que se déroule en parallèle une opération de mise en couche dans la zone de travail de l'autre plateau.

Le document US 2013/270750 A1 divulgue une machine et un procédé pour la fabrication additive de pièces par frittage laser comprenant deux modules d'émission, lesdits modules d'émission ayant une lentille de focalisation ayant une focale variable.

Toutefois, cette solution ne permet pas de réduire le temps de fabrication de chaque pièce sur le plateau de fabrication associé.

La présente invention vise à remédier à cet inconvénient.

Plus particulièrement, la présente invention vise à prévoir une machine de frittage permettant de réduire le temps de cycle nécessaire à la fabrication de chaque pièce et de réaliser une fusion particulièrement précise des couches de poudre.

Dans un mode de réalisation, la machine pour la fabrication additive de pièces par frittage ou fusion de poudre comprend un châssis, au moins une zone de travail, et au moins deux modules d'émission et de contrôle d'un faisceau énergétique montés à l'intérieur du châssis et pourvus chacun d'une source d'émission et d'un moyen de focalisation optique du faisceau énergétique émis par ladite source. Les modules d'émission et de contrôle agissent chacun sur ladite zone de travail pour la fabrication d'une même pièce. Au moins le moyen de focalisation optique de chaque module est mobile axialement en translation par rapport au châssis selon un axe vertical. La machine comprend en outre au moins deux actionneurs associés chacun à un seul des moyens de focalisation optique pour régler la position axiale verticale desdits moyens par rapport à la zone de travail indépendamment l'une de l'autre.

L'utilisation d'au moins deux modules d'émission et de contrôle associés à une même zone de travail permet de réduire le temps de fabrication d'une pièce. En effet, les modules agissent simultanément sur la zone de travail pour la fabrication de ladite pièce.

Par ailleurs, le réglage du positionnement axial des moyens de focalisation optique indépendamment l'un de l'autre permet de pouvoir placer chacun de ces moyens à la distance de travail souhaitée par rapport à la zone de travail. En effet, les moyens de focalisation, qui peuvent par exemple être des lentilles, possèdent chacun une distance focale réelle après fabrication qui diffère de leur distance focale théorique. Il est ainsi possible d'effectuer un réglage indépendant de la distance ou hauteur de travail de chaque moyen de focalisation en fonction de sa distance focale réelle par déplacement axial de ces moyens qui sont mobiles indépendamment l'un de l'autre. On peut ainsi obtenir une fusion particulièrement précise des couches de poudre déposées successivement sur la zone de travail par ce réglage indépendant de la position axiale des moyens de focalisation.

De préférence, la machine comprend un seul plateau de fabrication associé à ladite zone de travail.

Les modules d'émission et de contrôle peuvent comprendre chacun un carter supportant la source d'émission et le moyen de focalisation optique associé. Dans un mode de réalisation, le carter de chaque module est mobile axialement en translation par rapport au châssis sous l'effet de l'actionneur associé. Dans ce cas, le réglage de la distance de travail de chaque moyen de focalisation est obtenu par le déplacement du carter supportant ledit moyen.

Dans un mode de réalisation, chaque actionneur comprend un organe de commande à déplacement linéaire, le châssis comprenant des moyens de guidage de chacun desdits organes de commande. De préférence, la machine comprend en outre des moyens de réglage de l'orientation angulaire d'axes de guidage des moyens de guidage par rapport à ladite zone de travail. Ainsi, il est possible de s'assurer que le déplacement en translation de chaque module le long des glissières s'effectue selon une direction prédéterminée. Ceci accroît encore la précision de fusion des couches de poudre.

Le châssis peut comprendre au moins un bâti délimitant la zone de travail et au moins un caisson supportant les modules d'émission et de contrôle, les actionneurs et les moyens de guidage, les moyens de réglage étant interposés entre le bâti et le caisson.

De préférence, la machine comprend en outre des moyens de réglage de l'orientation angulaire de l'axe optique de chaque moyen de focalisation par rapport à ladite zone de travail. Ainsi, il est possible de régler l'orientation de chaque moyen de focalisation de sorte que son axe optique soit parfaitement perpendiculaire à la zone de travail. Un tel réglage préalable aux opérations de fusion favorise encore l'obtention d'une bonne précision de fusion.

Dans un mode de réalisation, la machine comprend au moins deux embases supportant chacune un des modules d'émission et de contrôle et reliées chacune à l'actionneur associé audit module, lesdits moyens de réglage étant interposés entre chaque embase de support et le module associé.

Les moyens de réglage peuvent comprendre chacun un corps, un coulisseau monté mobile à l'intérieur du corps, un organe de réglage de la position du coulisseau à l'intérieur du corps, et une douille d'actionnement montée sur le corps et coopérant avec le coulisseau de sorte à obtenir, sous l'effet d'un déplacement du coulisseau, une translation de ladite douille selon une direction transversale à la direction de déplacement dudit coulisseau.

Dans un mode de réalisation, la machine comprend au moins deux zones de travail distinctes, et au moins deux modules d'émission et de contrôle d'un faisceau énergétique propres à chacune des zones de travail. De préférence, la machine comprend un dispositif de mise en couche commun aux deux zones de travail.

Dans un exemple de réalisation, chaque actionneur comprend un moteur électrique associé à un système vis-écrou ou un vérin.

L'invention concerne également un procédé de fabrication additive d'au moins une pièce par frittage ou fusion de poudre comprenant les étapes suivantes:
- a) déposer une couche de poudre sur au moins une zone de travail,
- b) fusionner au moins en partie ladite couche déposée sur ladite zone de travail selon un motif correspondant à la section de ladite pièce à l'aide d'au moins deux faisceaux énergétiques et d'au moins deux moyens de focalisation distincts associés chacun à l'un desdits faisceaux,
- c) répéter les étapes a) et b) pour former la pièce par empilage de couches,
- d) avant et/ou pendant les opérations de fusion régler la position axiale verticale de chaque moyen de focalisation par rapport à la zone de travail indépendamment l'une de l'autre pour ajuster la dimension de chaque faisceau énergétique projeté sur ladite zone de travail.

Dans un mode de mise en œuvre préféré, on règle l'orientation angulaire de chaque moyen de focalisation par rapport à la zone de travail indépendamment l'une de l'autre avant les opérations de fusion.

La présente invention sera mieux comprise à la lecture de la description détaillée de modes de réalisation pris à titre d'exemples nullement limitatifs et illustrés par les dessins annexés sur lesquels :
- la figure 1 est une vue schématique en coupe d'une machine selon un premier exemple de réalisation,
- la figure 2 est une vue en coupe d'un moyen de réglage de la machine de la figure 1, et
- la figure 3 est une vue schématique en coupe d'une machine selon un second exemple de réalisation.

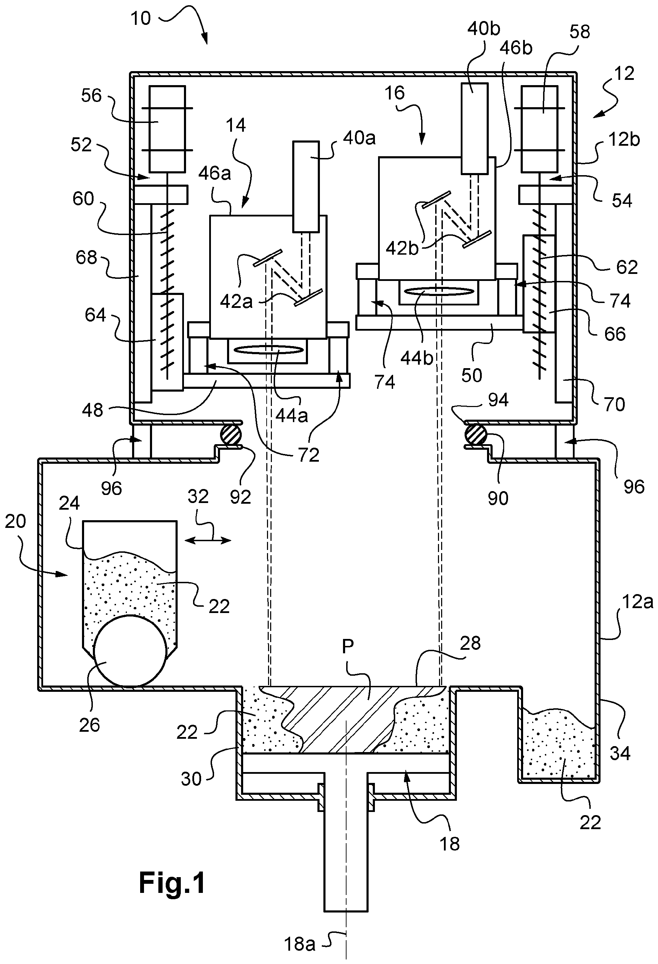

Sur la figure 1, on a représenté un exemple de réalisation d'une machine, référencée 10 dans son ensemble, prévue pour la fabrication additive d'au moins une pièce P et représentée dans une position supposée verticale. Par « au moins une pièce P », on entend une pièce P unique ou un ensemble de plusieurs pièces P réalisées simultanément.

La machine 10 comprend un châssis 12, deux modules 14, 16 d'émission et de contrôle d'un faisceau énergétique distincts, un plateau 18 de travail commun aux deux modules et un dispositif 20 de mise en couche pour appliquer de la poudre 22 sur le plateau de travail. Sur la figure, les deux faisceaux énergétiques distincts émis sont représentés en pointillés. Comme cela sera décrit plus en détail par la suite, la distance de travail entre chaque module 14, 16 et le plateau 18 associé est réglée indépendamment l'une de l'autre.

Dans l'exemple de réalisation illustré, le dispositif 20 de mise en couche comprend une trémie 24 de stockage et d'alimentation de la poudre 22 placée au-dessus du plateau 18 de travail, et un rouleau 26 rotatif pour le dosage de la poudre sur une zone de travail 28 plane délimitée par le châssis 12. Le rouleau 26 s'étend au travers d'une ouverture inférieure de la trémie 24 et permet de contrôler la quantité de poudre transférée par gravité. Le rouleau 26 peut par exemple comprendre une pluralité de rainures ménagées sur sa surface extérieure et ayant pour fonction de transférer une dose reproductible de poudre sur la zone de travail 28. Le dispositif 20 de mise en couche peut également comprendre, en combinaison ou en remplacement du rouleau, un autre moyen de répartition par exemple une raclette. Pour plus de détails sur la conception d'un tel dispositif de mise en couche, on pourra par exemple se référer aux demandes de brevet WO-A1-2013/092757 et WO-A1-2013/178825.

La zone de travail 28 est délimitée par une chemise 30 du châssis à l'intérieur de laquelle est monté de façon coulissante le plateau 18 de travail selon un axe 18a vertical. La chemise 30 présente une section transversale de même forme que celle du plateau 18, par exemple circulaire, carré, rectangulaire, etc. La chemise 30 est située en regard de la zone d'action des modules 14, 16 qui agissent tous les deux sur la zone de travail 28. La chemise 30 est solidaire du châssis 12 en étant rapportée et fixée sur ledit châssis ou en étant réalisée en une seule pièce avec ce dernier.

Le dispositif 20 de mise en couche est mobile en translation à l'intérieur du châssis 12 selon une direction de déplacement horizontale illustrée schématiquement par la flèche référencée 32 de sorte à pouvoir délivrer la quantité de poudre prédéterminée à chaque passage sur la zone de travail 28. Lorsque le dispositif 20 a franchi la zone de travail 28, le surplus de poudre est poussé dans un bac 34 de récupération du châssis 12 de la machine. Le bac 34 est adjacent à la chemise 30.

Les modules 14, 16 distincts sont disposés côte à côte à l'intérieur du châssis 12 et prévus pour agir sur la zone de travail 28 qui est commune à ces deux modules. Les modules 14, 16 étant identiques dans l'exemple de réalisation illustré, on décrira ici uniquement les composants du module 14 en utilisant la référence "a" étant entendu que les composants identiques de l'autre module 16 portent la référence "b" sur la figure 1.

Le module 14 comprend une source 40a d'émission d'un faisceau énergétique, par exemple du type laser, deux miroirs 42a galvanométriques aptes à contrôler l'orientation du faisceau émis, et une lentille 44a de focalisation dudit faisceau sur la zone de travail 28 afin de pouvoir chauffer chaque couche de poudre déposée selon un motif correspondant à la section de la pièce P à fabriquer et ainsi réaliser de manière sélective la fusion de la poudre.

Le module 14 comprend également un carter 46a sur lequel sont montés la source 40a, les miroirs 42a et la lentille 44a. Le carter 46a est supporté par une embase 48 du châssis. L'embase 48 de support est située verticalement au-dessus de la zone de travail 28. De façon identique, le carter 46b du module 16 est également supporté par une embase 50 du châssis qui est adjacente à l'embase 48. Les embases 48, 50 de support des modules comprennent chacune une ouverture (non représentée) pour permettre le passage des faisceaux énergétiques émis par les sources 40a, 40b et focalisés par les lentilles 44a, 44b.

La machine 10 comprend également deux actionneurs 52, 54 distincts associés chacun à l'un des modules 14, 16 de sorte à pouvoir modifier la position axiale des modules indépendamment l'une de l'autre. Chaque module 14, 16 est mobile axialement en translation par rapport au châssis 12 selon un axe vertical. Les actionneurs 52, 54 sont fixés sur le châssis 12 et montés à l'intérieur de celui-ci. Les actionneurs 52, 54 sont reliés respectivement aux embases 48, 50 de support pour permettre le déplacement des modules 14, 16.

Dans l'exemple de réalisation illustré, chaque actionneur 52, 54 comprend un moteur électrique 56, 58 fixé au châssis 12 et un système vis-écrou dont la vis 60, 62 est entraînée en rotation par le moteur et dont l'écrou 64, 66 est guidé en translation par une glissière 68, 70 du châssis, d'axe de guidage vertical. Les axes de guidage des glissières 68, 70 sont sensiblement parallèles entre eux. L'écrou 64, 66 est fixé à l'embase 48, 50 de support pour permettre le déplacement axial du module 14, 16 associé. L'écrou 64, 66 forme un organe de commande à action linéaire verticale du module 14, 16 associé.

Le système vis-écrou peut être du type à billes, à rouleaux ou encore à prise directe entre la vis et l'écrou. L'utilisation d'un système vis-écrou permet de pouvoir contrôler de manière extrêmement précise la position axiale de chaque module 14, 16 par rapport au châssis 12. Alternativement, il est cependant possible de prévoir d'autres types d'actionneurs par exemple des vérins électriques, hydrauliques ou pneumatiques.

La machine 10 comprend encore une paire de moyens de réglage 72 associée à chaque module 14, 16 pour pouvoir régler l'orientation angulaire de l'axe optique de la lentille 44a, 44b du module considéré par rapport à la zone de travail 28. Chaque paire de moyens de réglage 72 est interposée entre l'embase 48, 50 de support et le carter 46a, 46b associé du module. Comme cela sera décrit plus en détail par la suite, le réglage de l'orientation angulaire de l'axe optique de chaque lentille 44a, 44b est obtenu par orientation angulaire du module 14, 16 associé. Les moyens de réglage 72 d'une même paire sont disposés de part et d'autre de la lentille 44a, 44b du module associé. Une liaison rotule est également prévue entre l'embase 48, 50 de support et le carter 46a, 46b associé. Les moyens de réglage 72 sont identiques entre eux.

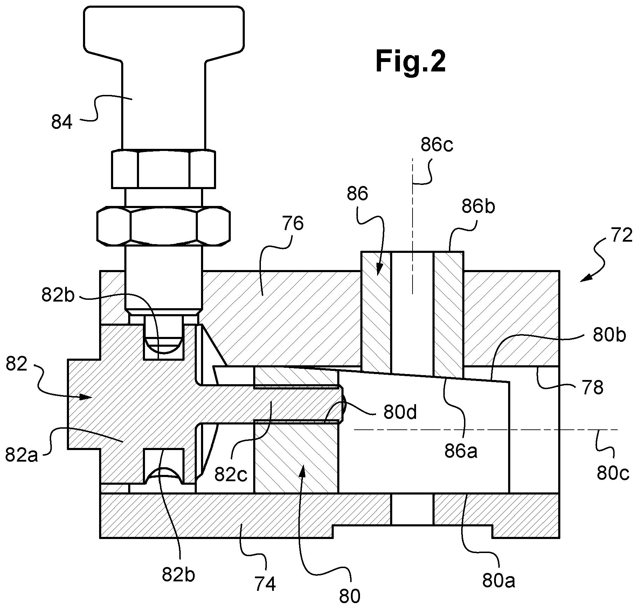

Comme illustré à la figure 2, le moyen de réglage 72 comprend une plaque 74 de base venant se fixer sur l'embase de support du module associé, et un corps 76 fixé sur la plaque et délimitant entre eux un logement 78 à l'intérieur duquel est monté un coulisseau 80. Le coulisseau 80 comprend une face inférieure 80a plane venant en appui contre la plaque 74 et une face supérieure 80b tronconique formant pente.

Le moyen de réglage 72 comprend également une vis 82 de réglage montée mobile à rotation à l'intérieur du logement 78 du corps pour permettre le déplacement en translation du coulisseau 80 selon un axe 80c horizontal, et un tirant 84 de blocage monté sur ledit corps pour assurer l'immobilisation en rotation de la vis 82. La vis 82 comprend une portion cylindrique 82a montée en partie à l'intérieur du corps 76 et une pluralité d'évidements 82b formés sur la surface extérieure de la portion cylindrique et prévus pour recevoir une extrémité inférieure du tirant 84 de sorte à obtenir le blocage en rotation de la vis. La vis 82 comprend également une tige filetée 82c prolongeant la portion cylindrique 82a et montée à l'intérieur d'un alésage 80d fileté correspondant du coulisseau. Le tirant 84 est mobile par rapport au corps 76 entre une position de verrouillage illustrée à la figure 2 dans laquelle son extrémité inférieure vient se loger à l'intérieur d'un des évidements 82b, et une position de déverrouillage dans laquelle ladite extrémité est située en retrait de la portion cylindrique 82a de sorte à pouvoir entraîner en rotation manuellement la vis 82. Un ressort de rappel (non représenté) permet de maintenir le tirant 84 dans la position de verrouillage et de le ramener automatiquement dans cette position après entraînement en rotation de la vis 82 par un opérateur.

Le moyen de réglage 72 comprend encore une douille 86 d'actionnement montée sur le corps 76 et comprenant une face inférieure 86a venant en appui contre la face supérieure 80b du coulisseau et en concordance de forme avec ladite face supérieure. La douille 86 comprend une face supérieure 86b prévue pour venir en appui contre la face inférieure du carter du module associé. La douille 86 est mobile en translation par rapport au corps 76 selon un axe 86c perpendiculaire à l'axe 80c du coulisseau sous l'effet d'un déplacement dudit coulisseau qui est commandé par une rotation de la vis 82.

En se référant de nouveau à la figure 1, le châssis 12 comprend un bâti 12a fixe inférieur et un caisson 12b supérieur monté sur le bâti. Le bâti 12a délimite la zone de travail 28 et comprend le bac 34 de récupération. Le dispositif 20 de mise en couche est monté à l'intérieur du bâti 12a. Le caisson 12b supporte les modules 14, 16, les embases 48, 50 de support ainsi que les actionneurs 52, 54 et les glissières 68, 70 associées. Ces moyens sont montés à l'intérieur du caisson 12b. Un organe d'étanchéité 90 annulaire, tel qu'un joint, est monté axialement entre le bâti 12a et le caisson 12b. Le bâti 12a et le caisson 12b comprennent chacun une ouverture 92, 94 pour le passage des faisceaux énergétiques émis par les sources 40a, 40b et focalisés par les lentilles 44a, 44b. Les ouvertures 92, 94 sont alignées verticalement.

La machine 10 comprend également deux moyens de réglage 96 prévus pour permettre l'orientation angulaire des axes de guidage des glissières 68, 70 par rapport à la zone de travail 28. Les moyens de réglage 96 sont interposés entre le bâti 12a et le caisson 12b afin de pouvoir obtenir le réglage de ces axes par orientation angulaire du caisson 12b supportant les glissières 68, 70. Les moyens de réglage 96 sont disposés entre une face supérieure du bâti 12a et une face inférieure du caisson 12b et disposés de part et d'autre des ouvertures 92, 94. Une liaison rotule est également prévue entre la face supérieure du bâti 12a et la face inférieure du caisson 12b. Chaque moyen de réglage 96 présente une structure identique à celle des moyens de réglage 72 précédemment décrite. La face supérieure de la douille d'actionnement de chaque moyen de réglage 96 vient en appui contre la face inférieure du caisson 12b.

Avant d'entreprendre la fabrication des pièces, on procède à deux étapes de réglage manuel de la machine 10 de la manière suivante. Dans une première étape, on règle manuellement l'orientation angulaire du caisson 12b par rapport au bâti 12a fixe. Lors de cette étape, on actionne les vis de réglage des moyens de réglage 96 pour déplacer verticalement les douilles d'actionnement et faire pivoter le caisson 12b autour d'un axe vertical par rapport au bâti 12a. On effectue ce réglage de sorte à orienter les axes de guidage des glissières 68, 70 perpendiculairement à la zone de travail 28.

Dans une deuxième étape de réglage manuel, on procède au réglage de l'orientation angulaire de l'axe optique de chaque lentille 44a, 44b par rapport à la zone de travail 28. Pour ce faire, on actionne les vis de réglage des moyens de réglage 72 pour déplacer verticalement les douilles d'actionnement et faire pivoter chaque module 14, 16 autour d'un axe vertical par rapport à l'embase 48 de support et au bâti 12a. Cette étape permet de régler manuellement l'orientation de l'axe optique de chaque lentille 44a, 44b de sorte qu'il soit parallèle à l'axe de la glissière 68, 70 associée. Après ce réglage, l'axe optique de chaque lentille 44a, 44b s'étend parallèlement à l'axe 18a de translation du plateau de travail et perpendiculairement à la zone de travail 28.

Après ces étapes de réglage manuel prévues pour la mise au point de la machine 10, on peut procéder à la fabrication des pièces.

Lors de la production des pièces, le dispositif 20 de mise en couche est d'abord commandé pour déposer une première couche de poudre sur la zone de travail 28 du plateau de fabrication. Après dépose, la première couche de poudre s'étend sensiblement horizontalement. La poudre peut par exemple être métallique ou minérale, par exemple céramique. De préférence, la poudre est métallique.

Ensuite, les actionneurs 52, 54 sont commandés pour régler de façon indépendante la position axiale de chaque lentille 44a, 44b des modules par rapport à la zone de travail 28. Les translations verticales des modules 14, 16 à l'intérieur du châssis 12 sont contrôlées par les actionneurs 52, 54 indépendamment l'une de l'autre.

Ainsi, il est possible de régler la distance axiale séparant chaque lentille 44a, 44b de la zone de travail 28 selon la distance focale réelle qui est propre à la chaine optique du module 14, 16 associé constituée par la source 40a, 40b d'émission, les miroirs 42a, 42 et ladite lentille. Par exemple, la distance focale réelle de chaque lentille est généralement différente de la distance focale théorique du fait des imprécisions de fabrication. Il est ainsi possible d'effectuer un réglage indépendant de la distance de travail de chaque lentille en fonction de la distance focale réelle de sorte que les rayons du faisceau énergétique émis par chaque source 40a, 40b convergent sur la zone de travail 28. La position verticale de chaque lentille 44a, 44b, et plus généralement de chaque module 14, 16, est donc ainsi réglée indépendamment l'une de l'autre en fonction de la distance focale réelle de ladite lentille, et plus généralement en fonction de la distance focale de la chaine optique associée. On favorise ainsi l'obtention d'une bonne précision de fusion de la couche de poudre déposée sur la zone de travail 28 par chaque module 14, 16. Ce réglage de la focalisation de la chaine optique de chaque module 14, 16 effectué en cours de fabrication des pièces est d'autant plus efficace que les étapes de réglage de l'orientation de l'axe optique de chaque lentille 44a, 44b réalisées avant cette fabrication sont précises.

Ensuite, lors d'une étape ultérieure, chaque source 40a, 40b est commandée pour émettre un faisceau énergétique dont l'orientation est contrôlée par les miroirs 42a, 42b associés et qui traverse la lentille 44a, 44b associée. Chaque lentille 44a, 44b permet de focaliser le faisceau énergétique associé selon le réglage effectué au préalable qui lui est propre afin de chauffer la couche de poudre selon un motif correspondant à la section de la pièce P à fabriquer, et ainsi réaliser de manière sélective la fusion de la poudre. Avec les deux modules 14, 16 agissant sur une même zone de travail 28 pour la fabrication d'une même pièce P, le temps de cycle de fabrication de la pièce est réduit.

Après l'étape de traitement par les faisceaux énergétiques de la première couche de poudre déposée, le plateau de travail 28 est abaissé de l'épaisseur de cette couche et une nouvelle couche de poudre est déposée par le dispositif 20 de mise en couche pour recouvrir la première couche de poudre qui est en partie fusionnée. À titre indicatif, l'épaisseur d'une couche de poudre peut varier de quelques micromètres, par exemple 10 µm, à plusieurs centaines de micromètres, par exemple 500 µm. La zone de travail 28 peut par exemple présenter une longueur de 500 mm.

Ensuite, le réglage indépendant de la position axiale de chaque lentille 44a, 44b des modules peut de nouveau être réalisée si besoin par les actionneurs 52, 54 de sorte à obtenir une bonne précision de fusion de la deuxième couche. La fusion sélective de la deuxième couche est réalisée comme précédemment. Ces étapes sont à nouveau répétées pour former par empilage de couches fusionnées la pièce P.

Au début de la fabrication de la pièce P, la zone de travail 28 est formée par la surface supérieure du plateau 18 de travail. En cours de fabrication, la zone de travail 28 est formée par la surface supérieure de la dernière couche déposée et supportée par le plateau 18. Au début et en cours de fabrication, la zone de travail 28 est délimitée radialement par la chemise 30. Lorsque la fabrication de la pièce P est terminée, c'est-à-dire lorsque toutes les couches de poudre nécessaires à sa construction ont été successivement déposées puis fusionnées, la pièce est évacuée du plateau 18 de fabrication.

Dans l'exemple de mise en œuvre décrit, le réglage indépendant de l'écart entre chaque lentille 44a, 44b des modules et la zone de travail 28 est effectué avant les opérations de fusion sélective des couches de poudre déposées. Un tel réglage peut également être réalisé pendant les opérations de fusion. Ainsi, il est possible de prévoir pour chaque module 14, 16 un réglage différent de la distance de travail selon la zone de la couche de poudre déposée à fusionner. Ceci permet de conserver une focalisation précise des faisceaux émis dans les différentes zones de la couche de poudre à fusionner. A titre indicatif, il peut par exemple être prévu pour chaque module 14, 16 un premier réglage pour les contours de la pièce P à fabriquer et un second réglage différent pour la zone centrale de la pièce de sorte à avoir deux focalisations différentes selon les zones des couches de poudre à fusionner.

Dans un autre exemple de mise en œuvre du procédé de fabrication additive, il est encore possible de prévoir de manière contrôlée une défocalisation de chaque faisceau énergétique sur une partie de la zone de travail 28 de sorte à obtenir un impact sous forme de cercle et non de point. On peut ainsi fusionner localement une zone de la couche de poudre déposée sur une surface plus importante si besoin. Ceci permet de réduire le temps de cycle de fabrication de la pièce.

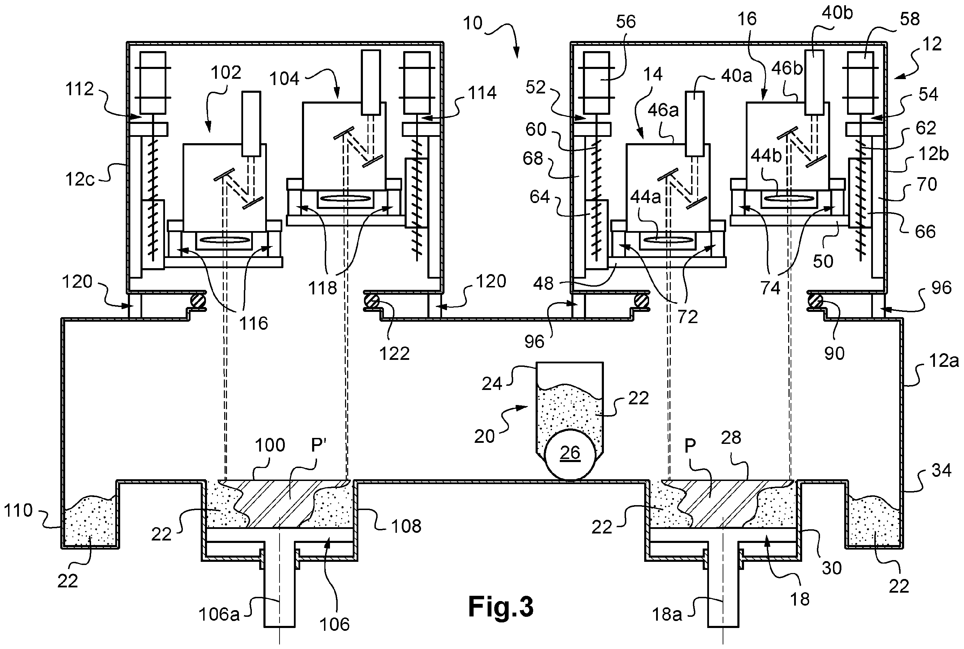

L'exemple de réalisation illustrée à la figure 3, sur laquelle les éléments identiques portent les mêmes références, diffère du premier exemple en ce que la machine 10 comprend une zone de travail 100 additionnelle distincte de la zone de travail 28 et deux modules 102, 104 d'émission et de contrôle d'un faisceau énergétique et associés à cette zone de travail 100. Dans cet exemple de réalisation, le châssis 12 comprend un deuxième caisson 12c supérieur monté sur le bâti 12a et à l'intérieur duquel sont disposés les modules 102, 104 distincts. Le bâti 12a présente ici une largeur accrue pour le montage du caisson 12c.

La machine 10 comprend également un plateau 106 de travail qui est associé à la zone de travail 100 et qui est commun aux deux modules 102, 104. Le plateau 106 est monté de façon coulissante à l'intérieur d'une chemise 108 du bâti 12a du châssis selon un axe 106a vertical. Un bac 110 de récupération de la poudre est prévu sur le bâti 12a en étant adjacent à la chemise 108. Les modules 102, 104 sont prévus pour agir sur la zone de travail 100 et obtenir la fabrication d'une deuxième pièce P' formée sur le plateau 106 de travail. Les modules 102, 104 sont identiques aux modules 14, 16 associés à la première zone de travail 28. Dans cet exemple de réalisation, le dispositif 20 de mise en couche de la poudre 22 est commun aux deux zones de travail 28, 100 de façon analogue à la demande de brevet WO-A1-2013/178825.

La machine 10 comprend deux actionneurs 112, 114 distincts associés chacun à l'un des modules 102, 104 de sorte à pouvoir modifier la position axiale des modules par rapport au châssis 12 indépendamment l'une de l'autre. Les modules 102, 104 associés à la zone de travail 100 sont mobiles indépendamment des modules 14, 16 associés à la zone de travail 28. La conception, le montage des actionneurs 112, 114 et leur coopération avec les modules 102, 104 et le caisson 12c sont identiques à ceux décrits précédemment pour les actionneurs 52, 54 des modules 14, 16.

La machine 10 comprend également une paire de moyens de réglage 116, 118 associée à chaque module 102, 104 pour pouvoir régler l'orientation angulaire de l'axe optique de la lentille du module considéré par rapport à la zone de travail 100. La machine 10 comprend encore deux moyens de réglage 120 prévus pour permettre l'orientation angulaire des axes de guidage des glissières coopérant avec les actionneurs 112, 114 par rapport à la zone de travail 100. La conception et la disposition des moyens de réglage 116 à 120 sont identiques à celles des moyens de réglage 72 et 96. Un organe d'étanchéité 122 annulaire, tel qu'un joint, est monté axialement entre le bâti 12a et le caisson 12c.

Dans les exemples de réalisation décrits, chaque module d'émission et de contrôle d'un faisceau énergétique est mobile en translation dans sa totalité par rapport au châssis. En variante, il pourrait être possible de prévoir une conception de chaque module de sorte que seule la lentille de focalisation dudit module est mobile en translation par rapport au châssis.

Grâce à l'invention, on dispose d'une machine comprenant au moins deux modules d'émission et de contrôle d'un faisceau énergétique qui agissent sur une zone de travail commune et comprennent chacun un moyen de focalisation optique du faisceau associé dont la distance de travail peut être réglée indépendamment de la distance de travail du ou des autres moyens de focalisation optique afin d'optimiser les paramètres de fusion.

## Revendications

1. Machine pour la fabrication additive de pièces par frittage ou fusion de poudre comprenant un châssis (12), au moins une zone de travail (28), et au moins deux modules (14, 16) d'émission et de contrôle d'un faisceau énergétique montés à l'intérieur du châssis et pourvus chacun d'une source d'émission (40a, 40b) et d'un moyen de focalisation (44a, 44b) optique du faisceau énergétique émis par ladite source, **caractérisée en ce que** les modules (14, 16) d'émission et de contrôle agissent chacun sur ladite zone de travail (28) pour la fabrication d'une même pièce, au moins le moyen de focalisation (44a, 44b) optique de chaque module étant mobile axialement en translation par rapport au châssis (12) selon un axe vertical, la machine comprenant en outre au moins deux actionneurs (52, 54) associés chacun à un seul des moyens de focalisation (44a, 44b) optique pour régler la position axiale verticale desdits moyens par rapport à la zone de travail (28) indépendamment l'une de l'autre.

2. Machine selon la revendication 1, comprenant un seul plateau (18) de fabrication associé à ladite zone de travail (28).

3. Machine selon la revendication 1 ou 2, dans laquelle les modules (14, 16) d'émission et de contrôle comprennent chacun un carter (46a, 46b) supportant la source d'émission (40a, 40b) et le moyen de focalisation (44a, 44b) optique associé.

4. Machine selon la revendication 3, dans laquelle le carter (46a, 46b) de chaque module est mobile axialement en translation par rapport au châssis sous l'effet de l'actionneur (52, 54) associé.

5. Machine selon l'une quelconque des revendications précédentes, dans laquelle chaque actionneur (52, 54) comprend un organe de commande (64, 66) à déplacement linéaire, le châssis (12) comprenant des moyens de guidage (68, 70) de chacun desdits organes de commande.

6. Machine selon la revendication 5, comprenant des moyens de réglage (96) de l'orientation angulaire d'axes de guidage des moyens de guidage (68, 70) par rapport à ladite zone de travail (28).

7. Machine selon la revendication 6, dans laquelle le châssis (12) comprend au moins un bâti (12a) délimitant la zone de travail (28) et au moins un caisson (12b) supportant les modules (14, 16) d'émission et de contrôle, les actionneurs (52, 54) et les moyens de guidage (68, 70), lesdits moyens de réglage (96) étant interposés entre le bâti (12a) et le caisson (12b).

8. Machine selon l'une quelconque des revendications précédentes, comprenant en outre des moyens de réglage (72) de l'orientation angulaire de l'axe optique de chaque moyen de focalisation (44a, 44b) par rapport à ladite zone de travail (28).

9. Machine selon la revendication 8, comprenant au moins deux embases (48, 50) supportant chacune un des modules (14, 16) d'émission et de contrôle et reliées chacune à l'actionneur (52, 54) associé audit module, lesdits moyens de réglage (72) étant interposés entre chaque embase de support et le module associé.

10. Machine selon l'une quelconque des revendications 6 à 9, dans laquelle les moyens de réglage (72 et 96) comprennent chacun un corps (76), un coulisseau (80) monté mobile à l'intérieur du corps, un organe de réglage (82) de la position du coulisseau à l'intérieur du corps, et une douille (86) d'actionnement montée sur le corps et coopérant avec le coulisseau de sorte à obtenir, sous l'effet d'un déplacement du coulisseau, une translation de ladite douille selon une direction transversale à la direction de déplacement dudit coulisseau.

11. Machine selon l'une quelconque des revendications précédentes, comprenant au moins deux zones de travail (28 ; 100) distinctes, et au moins deux modules (14, 16 ; 102, 104) d'émission et de contrôle d'un faisceau énergétique propres à chacune des zones de travail.

12. Machine selon la revendication 11, comprenant un dispositif de mise en couche (20) commun aux deux zones de travail (28 ; 100).

13. Machine selon l'une quelconque des revendications précédentes, dans laquelle chaque actionneur (52, 54) comprend un moteur électrique associé à un système vis-écrou ou un vérin.

14. Procédé de fabrication additive d'au moins une pièce par frittage ou fusion de poudre **caractérisé en ce qu'**il comprend les étapes suivantes:
- a) déposer une couche de poudre sur au moins une zone de travail,
- b) fusionner au moins en partie ladite couche déposée sur ladite zone de travail selon un motif correspondant à la section de ladite pièce à l'aide d'au moins deux faisceaux énergétiques et d'au moins deux moyens de focalisation distincts associés chacun à l'un desdits faisceaux,
- c) répéter les étapes a) et b) pour former la pièce par empilage de couches,
- d) avant et/ou pendant les opérations de fusion régler la position verticale de chaque moyen de focalisation par rapport à la zone de travail indépendamment l'une de l'autre pour ajuster la dimension de chaque faisceau énergétique projeté sur ladite zone de travail.

15. Procédé selon la revendication 14, dans lequel on règle l'orientation angulaire de chaque moyen de focalisation par rapport à la zone de travail indépendamment l'une de l'autre avant les opérations de fusion.

## Patentansprüche

1. Maschine zur generativen Herstellung von Teilen durch Sintern oder Schmelzen von Pulver, welche ein Gestell (12), wenigstens einen Arbeitsbereich (28) und wenigstens zwei Module (14, 16) zur Emission und Steuerung eines Energiestrahls, die im Inneren des Gestells angebracht sind und jeweils mit einer Emissionsquelle (40a, 40b) und einem Mittel zur optischen Fokussierung (44a, 44b) des von dieser Quelle emittierten Energiestrahls versehen sind, umfasst, **dadurch gekennzeichnet, dass** die Module (14, 16) zur Emission und Steuerung jeweils auf den Arbeitsbereich (28) zur Herstellung ein und desselben Teils einwirken, wobei wenigstens das Mittel zur optischen Fokussierung (44a, 44b) jedes Moduls in Bezug auf das Gestell (12) axial translatorisch beweglich entlang einer vertikalen Achse ist, wobei die Maschine außerdem wenigstens zwei Stellantriebe (52, 54) umfasst, die jeweils nur einem der Mittel zur optischen Fokussierung (44a, 44b) zugeordnet sind, um die vertikalen axialen Positionen dieser Mittel in Bezug auf den Arbeitsbereich (28) unabhängig voneinander einzustellen.

2. Maschine nach Anspruch 1, welche eine einzige Fertigungsplatte (18) umfasst, die dem Arbeitsbereich (28) zugeordnet ist.

3. Maschine nach Anspruch 1 oder 2, wobei die Module (14, 16) zur Emission und Steuerung jeweils ein Gehäuse (46a, 46b) umfassen, das die Emissionsquelle (40a, 40b) und das zugeordnete Mittel zur optischen Fokussierung (44a, 44b) trägt.

4. Maschine nach Anspruch 3, wobei das Gehäuse (46a, 46b) jedes Moduls unter der Wirkung des zugeordneten Stellantriebs (52, 54) axial translatorisch beweglich in Bezug auf das Gestell ist.

5. Maschine nach einem der vorhergehenden Ansprüche, wobei jeder Stellantrieb (52, 54) ein linear verschiebbares Steuerungsorgan (64, 66) umfasst, wobei das Gestell (12) Mittel zur Führung (68, 70) jedes der Steuerungsorgane umfasst.

6. Maschine nach Anspruch 5, welche Mittel zur Einstellung (96) der Winkelausrichtung von Führungsachsen der Führungsmittel (68, 70) in Bezug auf den Arbeitsbereich (28) umfasst.

7. Maschine nach Anspruch 6, wobei das Gestell (12) wenigstens einen Rahmen (12a), der den Arbeitsbereich (28) begrenzt, und wenigstens einen Kasten (12b), der die Module (14, 16) zur Emission und Steuerung, die Stellantriebe (52, 54) und die Führungsmittel (68, 70) trägt, umfasst, wobei die Einstellmittel (96) zwischen dem Rahmen (12a) und dem Kasten (12b) angeordnet sind.

8. Maschine nach einem der vorhergehenden Ansprüche, welche außerdem Mittel zur Einstellung (72) der Winkelausrichtung der optischen Achse jedes Fokussierungsmittels (44a, 44b) in Bezug auf den Arbeitsbereich (28) umfasst.

9. Maschine nach Anspruch 8, welche wenigstens zwei Grundplatten (48, 50) umfasst, die jeweils eines der Module (14, 16) zur Emission und Steuerung tragen und jeweils mit dem Stellantrieb (52, 54) verbunden sind, der dem betreffenden Modul zugeordnet ist, wobei die Einstellmittel (72) zwischen jeder Grundplatte und dem zugeordneten Modul angeordnet sind.

10. Maschine nach einem der Ansprüche 6 bis 9, wobei die Einstellmittel (72 und 96) jeweils umfassen: einen Körper (76), einen Schieber (80), der beweglich innerhalb des Körpers angebracht ist, ein Organ zur Einstellung (82) der Position des Schiebers innerhalb des Körpers und eine Betätigungshülse (86), die auf dem Körper angebracht ist und mit dem Schieber so zusammenwirkt, dass unter der Wirkung einer Verschiebung des Schiebers eine Translation der Hülse in einer Richtung quer zur Richtung der Verschiebung des Schiebers erzielt wird.

11. Maschine nach einem der vorhergehenden Ansprüche, welche wenigstens zwei verschiedene Arbeitsbereiche (28; 100) und wenigstens je zwei Module (14, 16; 102, 104) zur Emission und Steuerung eines Energiestrahls, die zu jedem der Arbeitsbereiche gehören, umfasst.

12. Maschine nach Anspruch 11, welche eine Vorrichtung zur Schichtbildung (20) umfasst, die den zwei Arbeitsbereichen (28; 100) gemeinsam ist.

13. Maschine nach einem der vorhergehenden Ansprüche, wobei jeder Stellantrieb (52, 54) einen Elektromotor, der einem Schraube-Mutter-System zugeordnet ist, oder einen Arbeitszylinder umfasst.

14. Verfahren zur generativen Herstellung wenigstens eines Teils durch Sintern oder Schmelzen von Pulver, **dadurch gekennzeichnet, dass** es die folgenden Schritte umfasst:
- a) Aufbringen einer Schicht Pulver auf wenigstens einen Arbeitsbereich,
- b) Schmelzen wenigstens eines Teils der auf den Arbeitsbereich aufgebrachten Schicht gemäß einem Muster, das dem Querschnitt des Teils entspricht, mithilfe von wenigstens zwei Energiestrahlen und wenigstens zwei verschiedenen Fokussierungsmitteln, die jeweils einem der Strahlen zugeordnet sind,
- c) Wiederholen der Schritte a) und b) zum Ausbilden des Teils durch Stapeln von Schichten,
- d) vor und/oder während der Arbeitsgänge des Schmelzens, Regeln der vertikalen Positionen aller Fokussierungsmittel in Bezug auf den Arbeitsbereich unabhängig voneinander, um die Abmessung jedes auf den Arbeitsbereich projizierten Energiestrahls einzustellen.

15. Verfahren nach Anspruch 14, wobei die Winkelausrichtungen aller Fokussierungsmittel in Bezug auf den Arbeitsbereich unabhängig voneinander vor den Arbeitsgängen des Schmelzens eingestellt werden.

## Claims

1. Machine for the additive manufacturing of components by sintering or melting powder, comprising a framework (12), at least one working zone (28), and at least two modules (14, 16) for the emission and control of an energy beam that are mounted inside the framework and are each provided with an emission source (40a, 40b) and an optical focusing means (44a, 44b) for the energy beam emitted by said source, **characterized in that** the emission and control modules (14, 16) each act on said working zone (28) in order to manufacture one and the same component, at least the optical focusing means (44a, 44b) of each module being axially movable in translation along a vertical axis with respect to the framework (12), the machine also comprising at least two actuators (52, 54) that are each associated with one of the optical focusing means (44a, 44b) in order to adjust the vertical axial positions of said means with respect to the working zone (28) independently of one another.

2. Machine according to Claim 1, which comprises a single build platform (18) associated with said working zone (28).

3. Machine according to Claim 1 or 2, wherein the emission and control modules (14, 16) each comprise a casing (46a, 46b) supporting the emission source (40a, 40b) and the associated optical focusing means (44a, 44b).

4. Machine according to Claim 3, wherein the casing (46a, 46b) of each module is axially movable in translation with respect to the framework under the effect of the associated actuator (52, 54).

5. Machine according to any one of the preceding claims, wherein each actuator (52, 54) comprises a linearly movable control member (64, 66), the framework (12) comprising guide means (68, 70) for guiding each of said control members.

6. Machine according to Claim 5, which comprises adjustment means (96) for adjusting the angular orientation of the guide axes of the guide means (68, 70) with respect to said working zone (28).

7. Machine according to Claim 6, wherein the framework (12) comprises at least one frame (12a) bounding the working zone (28) and at least one box (12b) supporting the emission and control modules (14, 16), the actuators (52, 54) and the guide means (68, 70), said adjustment means (96) being interposed between the frame (12a) and the box (12b).

8. Machine according to any one of the preceding claims, which also comprises adjustment means (72) for adjusting the angular orientation of the optical axis of each focusing means (44a, 44b) with respect to said working zone (28).

9. Machine according to Claim 8, which comprises at least two bases (48, 50) that each support one of the emission and control modules (14, 16) and are each connected to the actuator (52, 54) associated with said module, said adjustment means (72) being interposed between each support base and the associated module.

10. Machine according to any one of Claims 6 to 9, wherein the adjustment means (72, 96) each comprise a body (76), a slide (80) mounted in a movable manner inside the body, an adjustment member (82) for adjusting the position of the slide inside the body, and an actuating bushing (86) that is mounted on the body and cooperates with the slide so that, under the effect of a movement of the slide, said bushing moves in translation in a transverse direction with respect to the direction of movement of said slide.

11. Machine according to any one of the preceding claims, which comprises at least two separate working zones (28; 100) and at least two modules (14, 16; 102, 104) for the emission and control of an energy beam that are inherent to each of the working zones.

12. Machine according to Claim 11, which comprises a layering device (20) common to the two working zones (28; 100).

13. Machine according to any one of the preceding claims, wherein each actuator (52, 54) comprises an electric motor associated with a screw-nut system or an actuating cylinder.

14. Process for the additive manufacturing of at least one component by sintering or melting powder, **characterized in that** it comprises the following steps of:
- a) depositing a layer of powder on at least one working zone,
- b) at least partially melting said layer deposited on said working zone in a pattern corresponding to the section of said component with the aid of at least two energy beams and of at least two separate focusing means that are each associated with one of said beams,
- c) repeating steps a) and b) in order to form the component by stacking layers,
- d) before and/or during the melting operations, adjusting the vertical positions of each focusing means with respect to the working zone independently of one another in order to alter the size of each energy beam projected onto said working zone.

15. Process according to Claim 14, wherein the angular orientations of each focusing means with respect to the working zone are adjusted independently of one another before the melting operations.
